# EUROPEAN PATENT APPLICATION

(11) **EP 4 841 771 A1**
(43) Date of publication of application: **18.11.2026**
(21) Application number: 24949122.6
(22) Date of filing: 31.07.2024
(51) Int. Cl.: H01M 50/244, H01M 10/625, H01M 50/289, H01M 50/291

(54) **BATTERY DEVICE AND ELECTRIC APPARATUS**

(71) Applicant: Contemporary Amperex Technology Co., Limited, Ningde, Fujian 352100 (CN)
(72) Inventor: WANG, Jirong, Ningde, Fujian 352100 (CN); WU, Guangdang, Ningde, Fujian 352100 (CN); LUO, Wenchao, Ningde, Fujian 352100 (CN); WANG, Zhi, Ningde, Fujian 352100 (CN)
(74) Representative: Ziebig Hengelhaupt Intellectual Property Attorneys Patentanwaltskanzlei PartGmbB
(86) International application number: PCT/CN2024/108981
(87) International publication number: WO 2026/025381

(57) **Abstract**

A battery device (100) and an electric apparatus. The battery device (100) comprises a case (10), a first expansion beam (20), a first battery cell (31) and a first electrical component (41). The first expansion beam (20) is disposed in the case (10) and divides the internal space of the case (10) into a first battery compartment (11) and a first electrical compartment (12); the first battery cell (31) is disposed in the first battery compartment (11) and cooperates with the first expansion beam (20); and the first electrical component (41) is disposed in the first electrical compartment (12) and is electrically connected to the first battery cell (31). The first expansion beam (20) comprises a first beam (21) and a second beam (22) connected at an included angle, wherein a first mounting space (23) is formed between the first beam (21) and the second beam (22), the first mounting space (23) is located in the first electrical compartment (12), and the first electrical component (41) is at least partially mounted on the first expansion beam (20) and is accommodated in the first mounting space (23). By means of the above-described technical solution, the energy density of the battery device (100) can be improved.

## Description

### TECHNICAL FIELD

This application relates to the technical field of battery apparatuses, and specifically, to a battery apparatus and an electric device.

### BACKGROUND

Energy conservation and emission reduction are crucial to the sustainable development of the automobile industry. Electric vehicles, with their advantages in energy conservation and environmental protection, have become an important part of the sustainable development of the automobile industry. Battery technologies are an important factor related to the development of the electric vehicles.

In the process of manufacturing battery apparatuses, energy density of the battery apparatuses is a non-negligible issue. Therefore, how energy density of batteries is increased is an urgent technical problem that needs to be solved in battery technologies.

### SUMMARY

This application provides a battery apparatus and an electric device, so as to increase energy density of the battery apparatus.

This application is implemented using the following technical solutions.

According to a first aspect, an embodiment of this application provides a battery apparatus including a box, a first expansion beam, a first battery cell, and a first electrical component. The first expansion beam is provided in the box and divides a space in the box into a first battery compartment and a first electrical compartment. The first battery cell is provided in the first battery compartment and cooperates with the first expansion beam. The first electrical component is provided in the first electrical compartment and electrically connected to the first battery cell. The first expansion beam includes a first beam and a second beam connected at an angle. A first mounting space is formed between the first beam and the second beam. The first mounting space is located in the first electrical compartment. At least part of the first electrical component is mounted on the first expansion beam and accommodated in the first mounting space.

In the battery apparatus according to this embodiment of this application, the first beam and the second beam are arranged at an angle with each other, which can enhance the overall strength of the first expansion beam, so as to facilitate constraining of the swelling and deformation of the first battery cell; and at least part of the first electrical component is mounted in the first mounting space formed by the first beam and the second beam, which improves the utilization of the first mounting space, allowing for compact mounting of the structure inside the box, and improves the space utilization inside the box, allowing for higher energy density of the battery apparatus.

According to some embodiments of this application, the box includes a bottom wall, the bottom wall carries the first battery cell, the first beam cooperates with the first battery cell, and the first beam and/or the second beam is connected to the bottom wall.

In the foregoing solution, the first beam and/or the second beam is connected to the bottom wall, so as to facilitate the assembly positioning of the first expansion beam, and facilitate constraining of the swelling and deformation of the first battery cell by the first expansion beam.

According to some embodiments of this application, the battery apparatus further includes a high-voltage box, the high-voltage box is provided in the first electrical compartment, the high-voltage box is electrically connected to the first battery cell, and in a first direction, the high-voltage box, the first expansion beam, and the first battery cell are arranged in sequence, the first direction being perpendicular to a thickness direction of the bottom wall.

In the foregoing solution, the high-voltage box, the first expansion beam, and the first battery cell are arranged in sequence to facilitate the use of the space in the box in the first direction, allowing for a compact structure of the battery apparatus.

According to some embodiments of this application, the first electrical component includes a first battery monitoring unit and a first battery management unit; where the first battery monitoring unit is mounted on either of the first beam and the second beam, and the first battery management unit is mounted on either of the first beam and the second beam.

In the foregoing solution, the first battery monitoring unit is configured to monitor battery state information such as voltage and temperature of the first battery cell, and the first battery monitoring unit is mounted on the first beam or the second beam to facilitate the assembly positioning of the first battery monitoring unit; and the first battery management unit is configured for real-time monitoring, control, and protection of the first battery cell, and the first battery management unit is mounted on the first beam or the second beam to facilitate the assembly positioning of the first battery management unit.

According to some embodiments of this application, the first battery monitoring unit is mounted on the first beam, and a large surface of the first battery monitoring unit is attached to a wall surface of the first beam forming the first mounting space; and the first battery management unit is mounted on the second beam and spaced apart from the first battery monitoring unit.

In the foregoing solution, the first beam cooperates with the first battery cell, and a large surface of the first battery monitoring unit is attached to the wall surface of the first beam forming the first mounting space, so that the first battery monitoring unit and the first beam have a large connection area, improving the connection stability between the first battery monitoring unit and the first beam, and the distance between the first battery monitoring unit and the first battery cell is relatively short, allowing for a relatively short connection circuit between the first battery monitoring unit and the first battery cell. The first battery management unit is mounted on the second beam and spaced apart from the first battery monitoring unit, thereby improving the utilization of the first mounting space and reducing the risk of interference between the first battery management unit and the first battery monitoring unit.

According to some embodiments of this application, a first flow channel is formed inside the bottom wall, where the first flow channel is configured to accommodate a heat exchange medium; and a position where the bottom wall is connected to the first beam and/or the second beam avoids the first flow channel.

In the foregoing solution, the heat exchange medium is accommodated in the first flow channel, so that the temperature of the first battery cell can be adjusted using the heat exchange medium, improving the cycling performance of the first battery cell. The position where the bottom wall is connected to the first beam and/or the second beam avoids the first flow channel, which can reduce damage to the first flow channel and improve the connection reliability between the bottom wall and the first beam and/or the second beam.

According to some embodiments of this application, the battery apparatus further includes a first inlet connector and a first outlet connector, where both the first inlet connector and the first outlet connector are connected to the bottom wall, and the first inlet connector and the first outlet connector communicate with the first flow channel separately; and in a second direction, the first electrical component is located between the first inlet connector and the first outlet connector, the second direction being perpendicular to a thickness direction of the bottom wall.

In the foregoing solution, the first inlet connector and the first outlet connector communicate with the first flow channel separately, facilitating connection of the first inlet connector to a pipeline for inputting the heat exchange medium to deliver the heat exchange medium to the first flow channel, and facilitating connection of the first outlet connector to a pipeline for outputting the heat exchange medium to discharge the heat exchange medium from the first flow channel. The first electrical component is located between the first inlet connector and the first outlet connector, allowing for a compact structure of the first inlet connector, the first electrical component, and the first outlet connector, improving the space utilization inside the box in the second direction, and thereby increasing the energy density of the battery apparatus.

According to some embodiments of this application, the battery apparatus further includes a first inlet pipe, a first outlet pipe, and a high-voltage box, where the first inlet pipe is connected to the first inlet connector; the first outlet pipe is connected to the first outlet connector; and the high-voltage box is provided in the box and on the bottom wall, the high-voltage box is electrically connected to the first battery cell, and in the second direction, the high-voltage box is located between the first inlet pipe and the first outlet pipe.

In the foregoing solution, the high-voltage box is located between the first inlet pipe and the first outlet pipe, facilitating the use of the space inside the box in the second direction and improving the space utilization inside the box.

According to some embodiments of this application, the first beam has a first wall surface facing away from the first battery cell, the second beam has a second wall surface facing away from the bottom wall, the first wall surface and the second wall surface enclose the first mounting space, and an angle between the first wall surface and the second wall surface is an obtuse angle.

In the foregoing solution, the angle between the first wall surface and the second wall surface is an obtuse angle, so that the first mounting space can have a larger volume, to facilitate accommodation of the first electrical component and improve the space utilization inside the box.

According to some embodiments of this application, a cavity is formed inside each of the first beam and the second beam.

In the foregoing solution, a cavity is formed inside each of the first beam and the second beam, which can reduce the weight of the first beam and the second beam, and facilitate absorbing of an acting force from the first battery cell, thus constraining the swelling and deformation of the first battery cell.

According to some embodiments of this application, the battery apparatus further includes a second battery cell and a bracket, where the second battery cell is provided in the box and arranged with the first battery cell in a third direction; the bracket is provided between the first battery cell and the second battery cell, and the bracket carries the second battery cell; and the box includes a bottom wall, the bottom wall carries the first battery cell, and the third direction is parallel to a thickness direction of the bottom wall.

In the foregoing solution, the bracket separates the first battery cell and the second battery cell, and the bracket carries the second battery cell, facilitating the assembly positioning of the second battery cell.

According to some embodiments of this application, the battery apparatus further includes a second expansion beam and a second electrical component, where the second expansion beam is provided on the bracket and divides a space on a side of the bracket facing away from the first battery cell in the box into a second battery compartment and a second electrical compartment, the second battery cell being disposed in the second battery compartment and cooperating with the second expansion beam; the second electrical component is provided in the second electrical compartment and electrically connected to the second battery cell; and the second expansion beam includes a third beam and a fourth beam connected at an angle, a second mounting space is formed between the third beam and the fourth beam, the second mounting space is located in the second electrical compartment, and at least part of the second electrical component is mounted on the second expansion beam and accommodated in the second mounting space.

In the foregoing solution, the third beam and the fourth beam are arranged at an angle with each other, which can enhance the overall strength of the second expansion beam, so as to facilitate constraining of the swelling and deformation of the second battery cell; and at least part of the second electrical component is mounted in the second mounting space formed by the third beam and the fourth beam, which utilizes the second mounting space, allowing for compact mounting of the structure inside the box, and improves the space utilization inside the box, allowing for higher energy density of the battery apparatus.

According to some embodiments of this application, the bracket has a first end portion, and in a first direction, the first end portion extends beyond the first battery cell and the second battery cell, the first direction being perpendicular to the third direction; and in the third direction, the second expansion beam and the first expansion beam are located on two sides of the first end portion.

In the foregoing solution, the first end portion extends beyond the first battery cell and the second battery cell, and the second expansion beam and the first expansion beam are located on two sides of the first end portion in the third direction, facilitating the layout of the first electrical component and the second electrical component and improving the space utilization on two sides of the bracket in the third direction.

According to some embodiments of this application, the box includes a bottom wall, the bottom wall carries the first battery cell, the first battery compartment and the first electrical compartment are arranged in sequence in the first direction, and the first direction is perpendicular to the thickness direction of the bottom wall; and in a direction from the first battery compartment to the first electrical compartment, the bottom wall extends beyond the bracket, the first electrical compartment communicates with the second electrical compartment, and the third direction is parallel to the thickness direction of the bottom wall.

In the foregoing solution, the first electrical compartment communicates with the second electrical compartment, which facilitates the provision of other components in the space where the bottom wall extends beyond the bracket, thereby improving the space utilization inside the box.

According to some embodiments of this application, the battery apparatus further includes a high-voltage box, where the high-voltage box is provided on the bottom wall, and the high-voltage box is provided in the first electrical compartment and the second electrical compartment.

In the foregoing solution, the high-voltage box is provided in the first electrical compartment and the second electrical compartment, which can improve the utilization of the space where the bottom wall extends beyond the bracket, allowing for a compact structure of the components inside the box.

According to some embodiments of this application, the third beam cooperates with the second battery cell, and the third beam and/or the fourth beam is connected to the bracket; and the second electrical component includes a second battery monitoring unit and a second battery management unit, where the second battery monitoring unit is mounted on either of the third beam and the fourth beam, and the second battery management unit is mounted on either of the third beam and the fourth beam.

In the foregoing solution, the third beam and/or the fourth beam is connected to the bracket, so as to facilitate the assembly positioning of the second expansion beam, and facilitate constraining of the swelling and deformation of the second battery cell by the second expansion beam. The second battery monitoring unit is configured to monitor battery state information such as voltage and temperature of the second battery cell, and the second battery monitoring unit is mounted on the third beam or the fourth beam to facilitate the assembly positioning of the second battery monitoring unit; and the second battery management unit is configured for real-time monitoring, control, and protection of the second battery cell, and the second battery management unit is mounted on the third beam or the fourth beam to facilitate the assembly positioning of the second battery management unit.

According to some embodiments of this application, the second battery monitoring unit is mounted on the third beam, and a large surface of the second battery monitoring unit is attached to a wall surface of the third beam forming the second mounting space; and the second battery management unit is mounted on the fourth beam and spaced apart from the second battery monitoring unit.

In the foregoing solution, the third beam cooperates with the second battery cell, and a large surface of the second battery monitoring unit is attached to the wall surface of the third beam forming the second mounting space, so that the second battery monitoring unit and the third beam have a large connection area, improving the connection stability between the second battery monitoring unit and the third beam, and the distance between the second battery monitoring unit and the second battery cell is relatively short, allowing for a relatively short connection circuit between the second battery monitoring unit and the second battery cell. The second battery management unit is mounted on the fourth beam and spaced apart from the second battery monitoring unit, thereby improving the utilization of the second mounting space and reducing the risk of interference between the second battery management unit and the second battery monitoring unit.

According to some embodiments of this application, the third beam cooperates with the second battery cell, and the third beam and/or the fourth beam is connected to the bracket; and the third beam has a third wall surface facing away from the second battery cell, the fourth beam has a fourth wall surface facing away from the bracket, the third wall surface and the fourth wall surface enclose the second mounting space, and an angle between the third wall surface and the fourth wall surface is an obtuse angle.

In the foregoing solution, the third beam and/or the fourth beam is connected to the bracket, so as to facilitate the assembly positioning of the second expansion beam, and facilitate constraining of the swelling and deformation of the second battery cell by the second expansion beam. The angle between the third wall surface and the fourth wall surface is an obtuse angle, so that the second mounting space can have a larger volume, to facilitate accommodation of the second electrical component and improve the space utilization inside the box.

According to some embodiments of this application, a second flow channel is formed inside the bracket, where the second flow channel is configured to accommodate a heat exchange medium; and a position where the bracket is connected to the third beam and/or the fourth beam avoids the second flow channel.

In the foregoing solution, the heat exchange medium is accommodated in the second flow channel, so that the temperature of the second battery cell can be adjusted using the heat exchange medium, improving the cycling performance of the second battery cell. In addition, the bracket is located between the first battery cell and the second battery, so that the heat exchange medium in the bracket can also adjust the temperature of the first battery cell. The position where the bracket is connected to the third beam and/or the fourth beam avoids the second flow channel, which can reduce damage to the second flow channel and improve the connection reliability between the bracket and the third beam and/or the fourth beam.

According to some embodiments of this application, the battery apparatus further includes a second inlet connector and a second outlet connector, where both the second inlet connector and the second outlet connector are connected to the bracket, and the second inlet connector and the second outlet connector communicate with the second flow channel separately; and both the second inlet connector and the second outlet connector are located in the first electrical compartment, and in a second direction, the first electrical component is located between the second inlet connector and the second outlet connector, the second direction being perpendicular to the third direction.

In the foregoing solution, the second inlet connector and the second outlet connector communicate with the second flow channel separately, facilitating connection of the second inlet connector to a pipeline for inputting the heat exchange medium to deliver the heat exchange medium to the second flow channel, and facilitating connection of the second outlet connector to a pipeline for outputting the heat exchange medium to discharge the heat exchange medium from the second flow channel. In the third direction, the second inlet connector and the second outlet connector are located on a side of the bracket facing the bottom wall, and the first electrical component is located between the second inlet connector and the second connector, allowing for a compact structure of the second inlet connector, the first electrical component, and the second outlet connector, improving the space utilization inside the box in the second direction, and thereby increasing the energy density of the battery apparatus.

According to some embodiments of this application, the battery apparatus further includes a second inlet pipe, a second outlet pipe, and a high-voltage box, where the second inlet pipe is connected to the second inlet connector; the second outlet pipe is connected to the second outlet connector; and the high-voltage box is provided in the box, the first battery cell and the second battery cell are electrically connected to the high-voltage box separately, and in the second direction, the high-voltage box is located between the second inlet pipe and the second outlet pipe.

In the foregoing solution, the second inlet pipe and the second outlet pipe are located in the first electrical compartment, and the high-voltage box is located between the second inlet pipe and the second outlet pipe, facilitating the use of the space inside the box in the second direction and improving the space utilization inside the box.

According to some embodiments of this application, a cavity is formed inside each of the third beam and the fourth beam.

In the foregoing solution, a cavity is formed inside each of the third beam and the fourth beam, which can reduce the weight of the third beam and the fourth beam, and facilitate absorbing of an acting force from the second battery cell, thus constraining the swelling and deformation of the second battery cell.

According to a second aspect, an embodiment of this application further provides an electric device including the battery apparatus provided in any one of the foregoing embodiments, where the battery apparatus is configured to supply electrical energy.

For additional aspects and advantages of this application, some will be given in the following description, and some will become apparent in the following description or will be understood in the practice of this application.

### BRIEF DESCRIPTION OF DRAWINGS

To describe the technical solutions of embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a cross-sectional view of a battery apparatus according to some embodiments of this application;
FIG. 3 is a cross-sectional view of a partial structure of a battery apparatus according to some embodiments of this application;
FIG. 4 is a cross-sectional view of a battery apparatus according to some other embodiments of this application;
FIG. 5 is a schematic structural exploded view of a battery apparatus according to some embodiments of this application;
FIG. 6 is a schematic diagram of a partial structure of a battery apparatus according to some embodiments of this application;
FIG. 7 is a cross-sectional view of a partial structure of a battery apparatus according to some other embodiments of this application;
FIG. 8 is a schematic diagram of a partial structure of a battery apparatus according to some other embodiments of this application;
FIG. 9 is a locally enlarged view of portion A in FIG. 8; and
FIG. 10 is a schematic structural exploded view of a battery apparatus according to some other embodiments of this application.

In the accompanying drawings, the figures are not drawn to scale.

Reference signs: 100. battery apparatus; 10. box; 10a. first box body; 10b. second box body; 11. first battery compartment; 12. first electrical compartment; 13. bottom wall; 131. first flow channel; 14. second battery compartment; 15. second electrical compartment; 16. first side wall; 17. second side wall; 20. first expansion beam; 21. first beam; 211. first wall surface; 22. second beam; 221. second wall surface; 23. first mounting space; 31. first battery cell; 32. second battery cell; 41. first electrical component; 411. first battery monitoring unit; 412. first battery management unit; 42. second electrical component; 421. second battery monitoring unit; 422. second battery management unit; 51. third expansion beam; 52. fourth expansion beam; 60. high-voltage box; 71. first inlet connector; 72. first outlet connector; 73. first inlet pipe; 74. first outlet pipe; 75. second inlet connector; 76. second outlet connector; 77. second inlet pipe; 78. second outlet pipe; 791. main inlet pipe; 792. main outlet pipe; 80. bracket; 81. first end portion; 82. second flow channel; 90. second expansion beam; 91. third beam; 911. third wall surface; 92. fourth beam; 921. fourth wall surface; 93. second mounting space; 200. controller; 300. motor; 1000. vehicle; X. first direction; Y. second direction; and Z. third direction.

### DESCRIPTION OF EMBODIMENTS

The following further describes the implementations of this application in detail with reference to the accompanying drawings and embodiments. The following detailed description of embodiments and the accompanying drawings are intended to illustrate the principle of this application rather than to limit the scope of this application, meaning this application is not limited to the embodiments as described.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", "have", and any other variations thereof in the specification, claims and brief description of drawings of this application are intended to cover non-exclusive inclusions. In the description of the embodiments of this application, the technical terms "first", "second", and the like are merely intended to distinguish between different objects, and shall not be understood as any indication or implication of relative importance or any implicit indication of the number, sequence or primary-secondary relationship of the technical features indicated.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between contextually associated objects.

In this application, "a plurality of" means more than two (inclusive). Similarly, "a plurality of groups" means more than two (inclusive) groups, and "a plurality of pieces" means more than two (inclusive) pieces.

The battery apparatus mentioned in the embodiments of this application may include one or more battery cell groups configured to provide voltage and capacity. A battery cell group may include a plurality of battery cells, and the plurality of battery cells are connected in series, in parallel, or in series-parallel via a busbar.

In some embodiments, the battery cell group is generally formed by arranging a plurality of battery cells. In an example, the battery cell group may be a battery module, and the battery module is formed by arranging and fixing a plurality of battery cells into an independent module. In an example, the battery module may be formed by bundling a plurality of battery cells with straps.

In some embodiments, the battery apparatus may be a battery pack, the battery pack includes a box and one or more battery cell groups, and the battery cell groups are accommodated in the box.

In an example, the battery cell group may be a battery module, and the battery cell group may be accommodated in the box by fixing the battery module in the box.

In an example, the battery cell group may alternatively be accommodated in the box by directly fixing a plurality of battery cells to the box.

In an example, the box may include a first box body and a second box body. The first box body and the second box body are snap-fitted to form a closed space inside the box for accommodating the battery cell group. The closure herein refers to covering or closing, which may be sealed or non-sealed. The first box body may be a top cover or a bottom plate.

In an example, the box may include a top cover, a frame, and a bottom plate. The top cover and the bottom plate are separately connected to the frame to form a closed space inside the box for accommodating the battery cell group.

In an example, the box may be a part of a chassis structure of a vehicle. For example, the top cover of the box may be at least a part of the vehicle floor. Alternatively, the frame of the box may be at least a part of the vehicle's cross members and roof rails.

In some embodiments, the battery apparatus refers to an energy storage apparatus, and the energy storage apparatus includes a box, where the box is provided with a door on at least one side. Energy storage apparatuses include energy storage containers, energy storage cabinets, and the like.

In the embodiments of this application, a battery cell may be a secondary battery. A secondary battery refers to a battery cell that can continue to be used after discharged because its active materials can be reactivated through recharging.

The battery cell may be but is not limited to a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, or a lead-acid battery.

The battery cell generally includes an electrode assembly. The electrode assembly includes a positive electrode, a negative electrode, and a separator. During a charge and discharge process of the battery cell, active ions (such as lithium ions) are intercalated and deintercalated between the positive electrode and the negative electrode. The separator is sandwiched between the positive electrode and the negative electrode to reduce the risk of short circuits between the positive and negative electrodes and allow active ions to pass through.

In some embodiments, the positive electrode may be a positive electrode plate, and the positive electrode plate may include a positive electrode current collector and a positive electrode active material provided on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil or a composite current collector. For example, for the metal foil, stainless steel treated with silver surface, stainless steel, copper, aluminum, nickel, carbon paste electrode, carbon, nickel, or titanium may be used. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (matrices such as polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compound thereof. However, this application is not limited to these materials, and may alternatively use other conventional materials that can be used as positive electrode active materials for batteries.

In some embodiments, the negative electrode may be a negative electrode plate, and the negative electrode plate may include a negative electrode current collector.

In an example, the negative electrode current collector may be a metal foil or a composite current collector. For example, for the metal foil, aluminum treated with silver surface, stainless steel treated with silver surface, stainless steel, copper, aluminum, nickel, carbon paste electrode, carbon, nickel, titanium, or the like may be used.

In some embodiments, the negative electrode current collector has two opposite surfaces in its thickness direction, and a negative electrode active material is disposed on either or both of the two opposite surfaces of the negative electrode current collector.

In an example, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, and may alternatively use other conventional materials that can be used as negative electrode active materials for batteries instead. One type of these negative electrode active materials may be used alone, or two or more of them may be used in combination.

In some embodiments, the separator is a separation film. The separation film is not limited to any particular type in this application, and may be any well-known porous separation film with good chemical stability and mechanical stability.

In an example, a main material of the separation film may be at least one selected from glass fiber, non-woven fabric, polyethylene, polypropylene, and polyvinylidene fluoride, and ceramic. The separation film may be a single-layer thin film or a multi-layer composite thin film, which is not particularly limited. When the separation film is a multi-layer composite film, all layers may be made of same or different materials, which is not particularly limited. The separator may be a separate component located between the positive and negative electrodes or may be attached to surfaces of the positive and negative electrodes.

In some embodiments, the separator is a solid electrolyte. The solid electrolyte is sandwiched between the positive electrode and the negative electrode, to transmit ions and isolate the positive and negative electrodes.

In some embodiments, the electrode assembly is a wound structure. The positive electrode plate and the negative electrode plate are wound into a wound structure.

In some embodiments, the electrode assembly is a laminated structure.

In some embodiments, the battery cell may include a housing. The housing is configured to package components like the electrode assembly and electrolyte. The housing may be a steel, aluminum, plastic (such as polypropylene), or composite metal (such as copper-aluminum composite) shell, an aluminum-plastic film, or the like.

In some embodiments, the housing includes an end cover and a housing body, the housing body is provided with an opening, and the end cover closes the opening to form a closed space for accommodating substances such as the electrode assembly and the electrolyte. The housing body may be provided with one or more openings. The end cover may also be provided in one or more.

In some embodiments, the housing is provided with at least one electrode terminal, and the electrode terminal is electrically connected to a tab of the electrode assembly. The electrode terminal may be directly connected to the tab or indirectly connected to the tab via an adapter. The electrode terminal may be provided on the end cover or on the housing body.

In some embodiments, the housing is provided with an explosion-proof valve. The explosion-proof valve is configured to release an internal pressure of the battery cell.

In some embodiments, the housing may be a sealed structure or a non-sealed structure. In an example, when the housing is a sealed structure, the housing can protect the electrode assembly and prevent leakage of electrolyte. When the housing is a non-sealed structure, the housing can protect the electrode assembly, a sealing bag may be further included between the housing and the electrode assembly, and the sealing bag is configured to enclose the electrode assembly, the electrolyte, and the like. Specifically, the sealing bag may be a bag-shaped insulating member or aluminum-plastic film.

In an example, the battery cell may be a cylindrical battery cell, prismatic battery cell, pouch battery cell, or battery cell of another shape. Prismatic battery cells include square battery cells, blade battery cells, and multi-prismatic batteries, and multi-prismatic batteries are for example hexagonal batteries. This is not particularly limited in this application.

For the development of battery technologies, many design factors need to be considered, for example, performance parameters such as reliability, discharge capacity, and charge and discharge rate, as well as energy density of batteries.

In some embodiments, the battery apparatus includes a box and at least one battery cell group, the battery cell group is provided in the box, and to constrain the swelling and deformation of the battery cell group, an expansion beam is usually provided in the box. To enhance the strength of the expansion beam, a size of the expansion beam is large, so the expansion beam occupies a large space, resulting in low space utilization inside the box and low energy density of the battery apparatus.

In view of this, to solve the problem of low energy density of the battery apparatus caused by low space utilization inside the box, the embodiments of this application provide a battery apparatus including a box, a first expansion beam, a first battery cell, and a first electrical component. The first expansion beam is provided in the box and divides a space in the box into a first battery compartment and a first electrical compartment. The first battery cell is provided in the first battery compartment and cooperates with the first expansion beam. The first electrical component is provided in the first electrical compartment and electrically connected to the first battery cell. The first expansion beam includes a first beam and a second beam connected at an angle. A first mounting space is formed between the first beam and the second beam. The first mounting space is located in the first electrical compartment. At least part of the first electrical component is mounted on the first expansion beam and accommodated in the first mounting space. The first electrical component and the first expansion beam have a compact structure, the space utilization inside the box is high, and the battery apparatus has a high energy density.

In such battery apparatus, the first beam and the second beam are arranged at an angle with each other, which can enhance the overall strength of the first expansion beam, so as to facilitate constraining of the swelling and deformation of the first battery cell; and at least part of the first electrical component is mounted in the first mounting space formed by the first beam and the second beam, which improves the utilization of the first mounting space, allowing for compact mounting of the structure inside the box, and improves the space utilization inside the box, allowing for higher energy density of the battery apparatus.

The battery apparatus disclosed in the embodiments of this application may be used without limitation in an electric device such as a vehicle, a ship, or an aircraft. The battery apparatus disclosed in this application may be used to constitute a power supply system of the electric device.

The technical solutions described in the embodiments of this application are all applicable to various electric devices that use battery cells and battery apparatuses, for example, mobile phones, portable devices, notebook computers, electric bicycles, electric toys, electric tools, vehicles, ships, and spacecrafts. For example, spacecrafts include airplanes, rockets, space shuttles, and spaceships.

For ease of description, the electric device of an embodiment of this application being a vehicle is used as an example for description of the following embodiments.

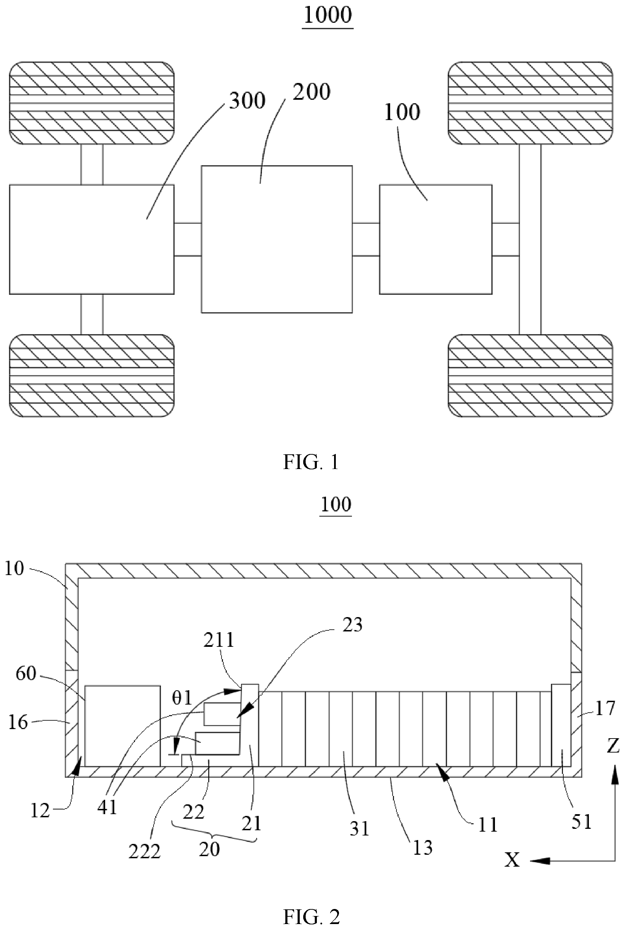

Referring to FIG. 1, FIG. 1 is a schematic structural diagram of a vehicle according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery apparatus 100 inside, where the battery apparatus 100 may be disposed at the bottom, front or rear of the vehicle 1000. The battery apparatus 100 may be configured to supply power to the vehicle 1000. For example, the battery apparatus 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery apparatus 100 to supply power to the motor 300, for example, to satisfy power needs of start, navigation, and driving of the vehicle 1000.

In some embodiments of this application, the battery apparatus 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a cross-sectional view of a battery apparatus according to some embodiments of this application. An embodiment of this application provides a battery apparatus 100 including a box 10, a first expansion beam 20, a first battery cell 31, and a first electrical component 41. The first expansion beam 20 is provided in the box 10 and divides a space in the box 10 into a first battery compartment 11 and a first electrical compartment 12. The first battery cell 31 is provided in the first battery compartment 11 and cooperates with the first expansion beam 20. The first electrical component 41 is provided in the first electrical compartment 12 and electrically connected to the first battery cell 31. The first expansion beam 20 includes a first beam 21 and a second beam 22 connected at an angle. A first mounting space 23 is formed between the first beam 21 and the second beam 22. The first mounting space 23 is located in the first electrical compartment 12. At least part of the first electrical component 41 is mounted on the first expansion beam 20 and accommodated in the first mounting space 23.

The box 10 is configured to provide an accommodating space, and the first battery cell 31 is accommodated in the accommodating space.

The first expansion beam 20 is provided in the accommodating space of the box 10 and divides the accommodating space into the first battery compartment 11 and the first electrical compartment 12, and the first battery compartment 11 and the first electrical compartment 12 may be distributed in a first direction X. The first direction X may be parallel to a length direction of the battery apparatus 100, or the first direction X may be parallel to a width direction of the battery apparatus 100.

The first battery compartment 11 is configured to accommodate the first battery cell 31, and the first electrical compartment 12 is configured to accommodate electrical components of the battery apparatus 100, where the electrical components may include but are not limited to the first electrical component 41. The electrical components of the battery apparatus 100 may include but are not limited to a battery management unit, a battery monitoring unit, and a high-voltage box.

The first electrical component 41 is an electrical component electrically connected to the first battery cell 31. The first electrical component 41 is configured to monitor information such as voltage, temperature, and current of the first battery cell 31, and the first electrical component 41 is further configured for real-time monitoring, control, and protection of the first battery cell 31. For example, the first electrical component 41 may include but is not limited to a first battery monitoring unit and a first battery management unit.

The first expansion beam 20 is configured to cooperate with the first battery cell 31 to constrain the swelling and deformation of the first battery cell 31.

In some embodiments, the battery apparatus 100 may further include a third expansion beam 51, where the third expansion beam 51 is provided in the box 10. The third expansion beam 51 and the first expansion beam 20 may be spaced apart from each other in the first direction X, and the first battery cell 31 is disposed between the third expansion beam 51 and the first expansion beam 20. The first direction X may be perpendicular to a large surface of the first battery cell 31, where the large surface of the first battery cell 31 refers to a surface of the first battery cell 31 having a larger area.

The first expansion beam 20 has specified strength, and the first expansion beam 20 may be made of metal, for example, aluminum, aluminum alloy, or steel.

The first beam 21 and the second beam 22 are two components constituting the first expansion beam 20, and the first beam 21 and the second beam 22 may be integrally formed, for example, the first expansion beam 20 is integrally extruded.

An angle between the first beam 21 and the second beam 22 may be an acute angle, a right angle, or an obtuse angle. Optionally, the angle between the first beam 21 and the second beam 22 is greater than or equal to 90°, so that under the condition of ensuring high overall strength of the first expansion beam 20, the first mounting space 23 can have a larger volume.

The first electrical component 41 and the first expansion beam 20 may be mounted in various manners, such as threaded connection, welded connection, or snap-fit connection.

During assembling of the first electrical component 41 and the first expansion beam 20, part of the first electrical component 41 may be located in the first mounting space 23, or an entirety of the first electrical component 41 may be located in the first mounting space 23.

In the battery apparatus 100 according to this embodiment of this application, the first beam 21 and the second beam 22 are arranged at an angle with each other, which can enhance the overall strength of the first expansion beam 20, so as to facilitate constraining of the swelling and deformation of the first battery cell 31; and at least part of the first electrical component 41 is mounted in the first mounting space 23 formed by the first beam 21 and the second beam 22, which improves the utilization of the first mounting space 23, allowing for compact mounting of the structure inside the box 10, and improves the space utilization inside the box 10, allowing for higher energy density of the battery apparatus 100.

Referring to FIG. 2, according to some embodiments of this application, the box 10 includes a bottom wall 13, the bottom wall 13 carries the first battery cell 31, the first beam 21 cooperates with the first battery cell 31, and the first beam 21 and/or the second beam 22 is connected to the bottom wall 13.

The bottom wall 13 is a wall of the box 10 used to support the first battery cell 31, and the first battery cell 31 is disposed on the bottom wall 13.

The first beam 21 may cooperate with the first battery cell 31 in various manners, for example, the first beam 21 may be connected to the first battery cell 31 via a buffer pad, or the first beam 21 may be attached to a large surface of the first battery cell 31.

In some embodiments, the first beam 21 may be connected to the bottom wall 13, the second beam 22 may be connected to the bottom wall 13, or the first beam 21 and the second beam 22 may be separately connected to the bottom wall 13.

The first beam 21 and/or the second beam 22 may be connected to the bottom wall 13 in various manners, such as welded connection, adhesive connection, snap-fit connection, or threaded connection. In some embodiments, the first beam 21 and/or the second beam 22 is welded to the bottom wall 13, allowing for firm connection between the first beam 21 and/or the second beam 22 and the bottom wall 13.

Optionally, the second beam 22 may be located at an end of the first beam 21 closer to the bottom wall 13, and the second beam 22 and the first beam 21 are separately connected to the bottom wall 13.

In the foregoing solution, the first beam 21 and/or the second beam 22 is connected to the bottom wall 13, so as to facilitate the assembly positioning of the first expansion beam 20, and facilitate constraining of the swelling and deformation of the first battery cell 31 by the first expansion beam 20.

Referring to FIG. 2, according to some embodiments of this application, the battery apparatus 100 further includes a high-voltage box 60, the high-voltage box 60 is provided in the first electrical compartment 12, the high-voltage box 60 is electrically connected to the first battery cell 31, in the first direction X, the high-voltage box 60, the first expansion beam 20, and the first battery cell 31 are arranged in sequence, and the first direction X is perpendicular to a thickness direction of the bottom wall 13.

The high-voltage box 60 may be an apparatus configured to implement distribution of high-voltage electrical energy and overload and short-circuit protection of a high-voltage loop of battery cells in the battery apparatus 100.

The high-voltage box 60 is disposed in the first electrical compartment 12, and the high-voltage box 60 may be electrically connected to the first electrical component 41.

The first electrical compartment 12 and the first battery compartment 11 are distributed in the first direction X, so that the high-voltage box 60, the first expansion beam 20, and the first battery cell 31 can be arranged in sequence in the first direction X.

The first direction X is perpendicular to the thickness direction of the bottom wall 13, and the first direction X may be parallel to the length direction or width direction of the battery apparatus 100.

In the foregoing solution, the high-voltage box 60, the first expansion beam 20, and the first battery cell 31 are arranged in sequence to facilitate the use of the space in the box 10 in the first direction X, allowing for a compact structure of the battery apparatus 100.

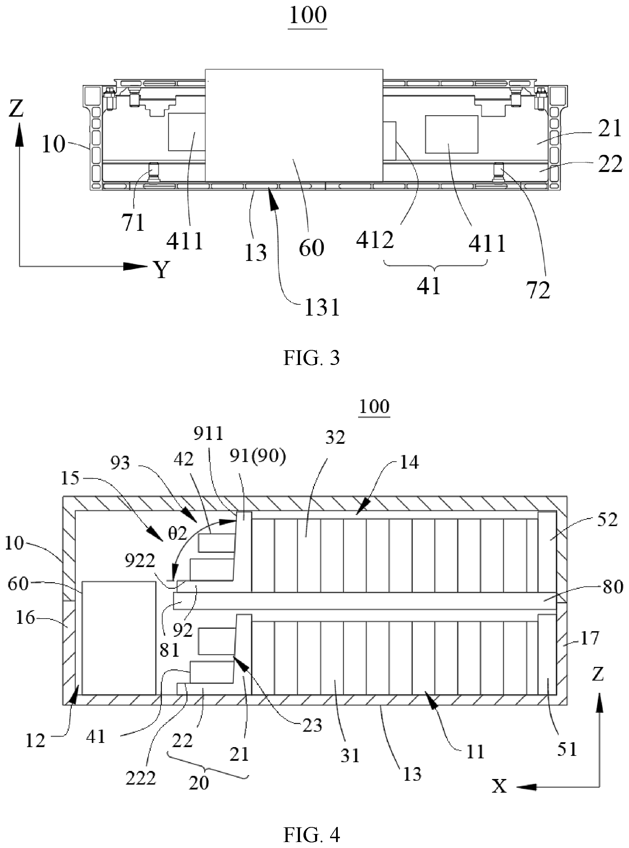

Referring to FIG. 3, FIG. 3 is a cross-sectional view of a partial structure of a battery apparatus according to some embodiments of this application. According to some embodiments of this application, the first electrical component 41 includes a first battery monitoring unit 411 and a first battery management unit 412; where the first battery monitoring unit 411 is mounted on either of the first beam 21 and the second beam 22, and the first battery management unit 412 is mounted on either of the first beam 21 and the second beam 22.

The first battery monitoring unit 411 is configured to monitor battery state information such as voltage and temperature of the first battery cell 31.

In some embodiments, the battery apparatus 100 further includes a first sampling assembly, where the first sampling assembly is electrically connected to the first battery monitoring unit 411, and the first sampling assembly is electrically connected to the first battery cell 31 and collects voltage signals, temperature signals, current signals, or the like of the first battery cell 31.

The first battery monitoring unit 411 may be mounted on the first beam 21, or the first battery monitoring unit 411 may be mounted on the second beam 22.

The first battery management unit 412 is configured for real-time monitoring, control, and protection of the first battery cell 31, and the first battery monitoring unit 411 may be electrically connected to the first battery management unit 412.

The first battery management unit 412 may be mounted on the first beam 21, or the first battery management unit 412 may be mounted on the second beam 22.

In the foregoing solution, the first battery monitoring unit 411 is mounted on the first beam 21 or the second beam 22 to facilitate the assembly positioning of the first battery monitoring unit 411; and the first battery management unit 412 is mounted on the first beam 21 or the second beam 22 to facilitate the assembly positioning of the first battery management unit 412.

Referring to FIG. 3, according to some embodiments of this application, the first battery monitoring unit 411 is mounted on the first beam 21, and a large surface of the first battery monitoring unit 411 is attached to a wall surface of the first beam 21 forming the first mounting space 23; and the first battery management unit 412 is mounted on the second beam 22 and spaced apart from the first battery monitoring unit 411.

The large surface of the first battery monitoring unit 411 refers to a surface of the first battery monitoring unit 411 having a larger area.

The wall surface of the first beam 21 forming the first mounting space 23 refers to a wall surface of the first beam 21 farther away from the first battery cell 31, and this wall surface may be arranged facing the first electrical component 41.

In some embodiments, the first battery monitoring unit 411 may be threadedly connected to the first beam 21 via a bolt to facilitate the assembly and disassembly of the first battery monitoring unit 411.

In some embodiments, the first battery management unit 412 may be threadedly connected to the second beam 22 via a bolt to facilitate the assembly and disassembly of the first battery management unit 412.

The first battery management unit 412 is spaced apart from the first battery monitoring unit 411. For example, as shown in FIG. 3, the first battery management unit 412 may be spaced apart from the first battery monitoring unit 411 in a second direction, and the second direction, the first direction X, and the thickness direction of the bottom wall 13 are perpendicular to each other. For another example, the first battery management unit 412 may be spaced apart from the first battery monitoring unit 411 in the thickness direction of the bottom wall 13.

In the foregoing solution, the first beam 21 cooperates with the first battery cell 31, and a large surface of the first battery monitoring unit 411 is attached to the wall surface of the first beam 21 forming the first mounting space 23, so that the first battery monitoring unit 411 and the first beam 21 have a large connection area, improving the connection stability between the first battery monitoring unit 411 and the first beam 21, and the distance between the first battery monitoring unit 411 and the first battery cell 31 is relatively short, allowing for a relatively short connection circuit between the first battery monitoring unit 411 and the first battery cell 31. The first battery management unit 412 is mounted on the second beam 22 and spaced apart from the first battery monitoring unit 411, thereby improving the utilization of the first mounting space 23 and reducing the risk of interference between the first battery management unit 412 and the first battery monitoring unit 411.

Referring to FIG. 3, according to some embodiments of this application, a first flow channel 131 is formed inside the bottom wall 13, where the first flow channel 131 is configured to accommodate a heat exchange medium; and a position where the bottom wall 13 is connected to the first beam 21 and/or the second beam 22 avoids the first flow channel 131.

The bottom wall 13 is a hollow structure inside, and the first flow channel 131 is formed inside the bottom wall 13 to facilitate accommodation of the heat exchange medium.

The bottom wall 13 may be integrally extruded to facilitate forming of the first flow channel 131 inside the bottom wall 13 for easy processing and manufacturing. During the extrusion process of the bottom wall 13, a stiffener may be formed inside the bottom wall 13 to improve the overall strength of the bottom wall 13.

In some embodiments, the bottom wall 13 is welded to the first beam 21 and/or the second beam 22 to allow for firm connection between the bottom wall 13 and the first beam 21 and/or the second beam 22.

When the bottom wall 13 is connected to the first beam 21, the position where the bottom wall 13 is connected to the first beam 21 avoids the first flow channel 131. When the bottom wall 13 is connected to the second beam 22, the position where the bottom wall 13 is connected to the second beam 22 avoids the first flow channel 131. When the bottom wall 13 is connected to the first beam 21 and the second beam 22, the position where the bottom wall 13 is connected to the first beam 21 avoids the first flow channel 131, and the position where the bottom wall 13 is connected to the second beam 22 avoids the second flow channel.

The heat exchange medium mentioned in this application may be water, alcohol, or other liquid mixtures.

The bottom wall 13 may be made of a material with good thermal conductivity, such as aluminum, aluminum alloy, or steel.

In the foregoing solution, the heat exchange medium is accommodated in the first flow channel 131, so that the temperature of the first battery cell 31 can be adjusted using the heat exchange medium, improving the cycling performance of the first battery cell 31. The position where the bottom wall 13 is connected to the first beam 21 and/or the second beam 22 avoids the first flow channel 131, which can reduce damage to the first flow channel 131 and improve the connection reliability between the bottom wall 13 and the first beam 21 and/or the second beam 22.

According to some embodiments of this application, the battery apparatus 100 further includes a first inlet connector 71 and a first outlet connector 72, where both the first inlet connector 71 and the first outlet connector 72 are connected to the bottom wall 13, and the first inlet connector 71 and the first outlet connector 72 communicate with the first flow channel 131 separately; and in a second direction Y, the first electrical component 41 is located between the first inlet connector 71 and the first outlet connector 72, the second direction Y being perpendicular to the thickness direction of the bottom wall 13.

In some embodiments, the bottom wall 13 is provided with a first through hole and a second through hole, where the first through hole communicates the first flow channel 131 with the external environment of the first flow channel 131, the second through hole communicates the first flow channel 131 with the external environment of the first flow channel 131, the first inlet connector 71 is disposed in the first through hole, and the first inlet connector 71 is sealingly connected to the bottom wall 13 to reduce the risk of leakage of the heat exchange medium from a junction between the first inlet connector 71 and the bottom wall 13; and the first outlet connector 72 is disposed in the second through hole, and the first outlet connector 72 is sealingly connected to the bottom wall 13 to reduce the risk of leakage of the heat exchange medium from a junction between the first outlet connector 72 and the bottom wall 13.

The first inlet connector 71 and the first outlet connector 72 are spaced apart from each other in the second direction Y to make a flow path of the heat exchange medium in the first flow channel 131 longer. For example, the first inlet connector 71 and the first outlet connector 72 may be disposed at two ends of the bottom wall 13 in the second direction Y to make the heat exchange medium have a longer flow path in the first flow channel 131, thereby improving the heat exchange effect between the heat exchange medium and the first battery cell 31.

In the foregoing solution, the first inlet connector 71 and the first outlet connector 72 communicate with the first flow channel 131 separately, facilitating connection of the first inlet connector 71 to a pipeline for inputting the heat exchange medium to deliver the heat exchange medium to the first flow channel 131, and facilitating connection of the first outlet connector 72 to a pipeline for outputting the heat exchange medium to discharge the heat exchange medium from the first flow channel 131. The first electrical component 41 is located between the first inlet connector 71 and the first outlet connector 72, allowing for a compact structure of the first inlet connector 71, the first electrical component 41, and the first outlet connector 72, improving the space utilization inside the box 10 in the second direction Y, and thereby increasing the energy density of the battery apparatus 100.

Referring to FIG. 3, according to some embodiments of this application, the battery apparatus 100 further includes a first inlet pipe 73, a first outlet pipe 74, and a high-voltage box 60, where the first inlet pipe 73 is connected to the first inlet connector 71; the first outlet pipe 74 is connected to the first outlet connector 72; and the high-voltage box 60 is provided in the box 10 and on the bottom wall 13, the high-voltage box 60 is electrically connected to the first battery cell 31, and in the second direction Y, the high-voltage box 60 is located between the first inlet pipe 73 and the first outlet pipe 74.

The first inlet pipe 73 is a pipe used to input the heat exchange medium into the first flow channel 131, one end of the first inlet pipe 73 is connected to the first inlet connector 71, and the other end of the first inlet pipe 73 is used to connect to a container storing the heat exchange medium.

The first outlet pipe 74 is a pipe used to output the heat exchange medium from the first flow channel 131, one end of the first outlet pipe 74 is connected to the first outlet connector 72, and the other end of the first outlet pipe 74 is used to connect to the container storing the heat exchange medium.

The first inlet pipe 73 and the first outlet pipe 74 communicate with the first flow channel 131 separately to facilitate the circulation of the heat exchange medium in the first flow channel 131, improving the heat exchange effect.

At least part of the high-voltage box 60 may be disposed in the first electrical compartment 12, and the high-voltage box 60 and the bottom wall 13 may be threadedly connected using a bolt to facilitate the assembly and disassembly of the high-voltage box 60.

The first inlet pipe 73 and the first outlet pipe 74 are spaced apart from each other in the second direction Y, and a large distance may be present between the first inlet pipe 73 and the first outlet pipe 74, to make the heat exchange medium have a longer flow path in the first flow channel 131. For example, the first inlet pipe 73 and the first outlet pipe 74 are disposed at two ends of the bottom wall 13 in the second direction Y.

In the foregoing solution, the high-voltage box 60 is located between the first inlet pipe 73 and the first outlet pipe 74, facilitating the use of the space inside the box 10 in the second direction Y and improving the space utilization inside the box 10.

Referring to FIG. 2, according to some embodiments of this application, the first beam 21 has a first wall surface 211 facing away from the first battery cell 31, the second beam 22 has a second wall surface 221 facing away from the bottom wall 13, the first wall surface 211 and the second wall surface 221 enclose the first mounting space 23, and an angle θ1 between the first wall surface 211 and the second wall surface 221 is an obtuse angle.

In some embodiments, the second wall surface 221 may be disposed parallel to the bottom wall 13, and the first wall surface 211 may be disposed inclined to the thickness direction of the bottom wall 13.

The angle θ1 between the first wall surface 211 and the second wall surface 221 is an obtuse angle, so that the first mounting space 23 can have a larger opening.

In the foregoing solution, the angle between the first wall surface 211 and the second wall surface 221 is an obtuse angle, so that the first mounting space 23 can have a larger volume, to facilitate accommodation of the first electrical component 41 and improve the space utilization inside the box 10.

According to some embodiments of this application, a cavity is formed inside each of the first beam 21 and the second beam 22.

The first beam 21 may be extruded, and at least one stiffener may be provided in the cavity of the first beam 21, where the stiffener divides the cavity into multiple chambers.

The second beam 22 may be extruded, and at least one stiffener may be provided in the cavity of the second beam 22, where the stiffener divides the cavity into multiple chambers.

In the foregoing solution, a cavity is formed inside each of the first beam 21 and the second beam 22, which can reduce the weight of the first beam 21 and the second beam 22, and facilitate absorbing of an acting force from the first battery cell 31, thus constraining the swelling and deformation of the first battery cell 31.

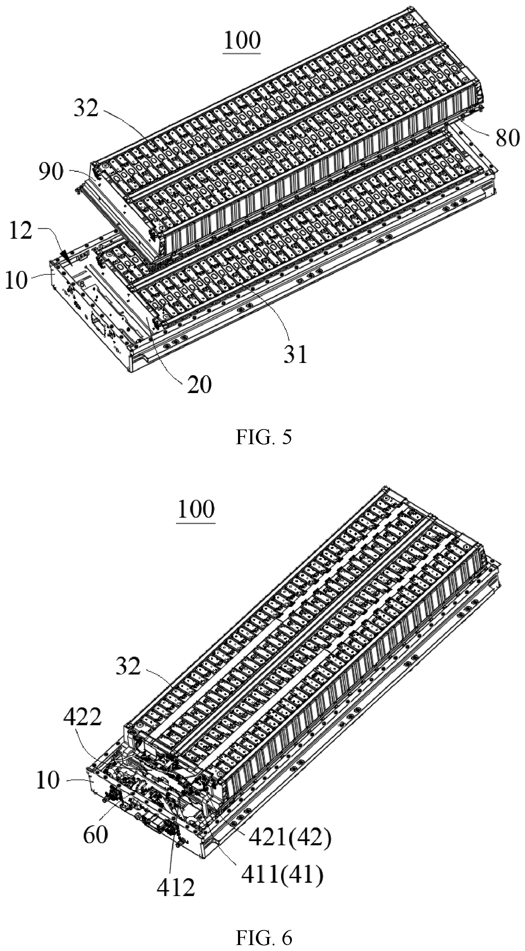

Referring to FIG. 4 to FIG. 6, FIG. 4 is a cross-sectional view of a battery apparatus according to some other embodiments of this application, FIG. 5 is an exploded schematic diagram of a structure of a battery apparatus according to some embodiments of this application, and FIG. 6 is a schematic diagram of a partial structure of a battery apparatus according to some embodiments of this application. According to some embodiments of this application, the battery apparatus 100 further includes a second battery cell 32 and a bracket 80, where the second battery cell 32 is provided in the box 10 and arranged with the first battery cell 31 in a third direction Z; the bracket 80 is provided between the first battery cell 31 and the second battery cell 32, and the bracket 80 carries the second battery cell 32; and the box 10 includes a bottom wall 13, the bottom wall 13 carries the first battery cell 31, and the third direction Z is parallel to the thickness direction of the bottom wall 13.

Both the second battery cell 32 and the first battery cell 31 are located in the box 10, the second battery cell 32 and the first battery cell 31 are arranged in the third direction Z, and the second battery cell 32 and the first battery cell 31 may be two layers of battery cells distributed in the third direction Z. For example, when the third direction Z is parallel to a vertical direction, the first battery cell 31 may be a lower-layer battery cell, and the second battery cell 32 may be an upper-layer battery cell.

The bracket 80 is a component separating the first battery cell 31 and the second battery cell 32, and the bracket 80 is configured to support the second battery cell 32. In some embodiments, a gap is present between the bracket 80 and the first battery cell 31 in the third direction Z.

The bottom wall 13 is configured to support the first battery cell 31 to facilitate positioning of the first battery cell 31.

In some embodiments, the bracket 80 may be disposed parallel to the bottom wall 13.

In the foregoing solution, the bottom wall 13 carries the first battery cell 31, facilitating the assembly positioning of the first battery cell 31, the bracket 80 separates the first battery cell 31 and the second battery cell 32, and the bracket 80 carries the second battery cell 32, facilitating the assembly positioning of the second battery cell 32.

Referring to FIG. 4, according to some embodiments of this application, the battery apparatus 100 further includes a second expansion beam 90 and a second electrical component 42, where the second expansion beam 90 is provided on the bracket 80 and divides a space on a side of the bracket 80 facing away from the first battery cell 31 in the box 10 into a second battery compartment 14 and a second electrical compartment 15, the second battery cell 32 being disposed in the second battery compartment 14 and cooperating with the second expansion beam 90; the second electrical component 42 is provided in the second electrical compartment 15 and electrically connected to the second battery cell 32; and the second expansion beam 90 includes a third beam 91 and a fourth beam 92 connected at an angle, a second mounting space 93 is formed between the third beam 91 and the fourth beam 92, the second mounting space 93 is located in the second electrical compartment 15, and at least part of the second electrical component 42 is mounted on the second expansion beam 90 and accommodated in the second mounting space 93.

The second expansion beam 90 is provided on the bracket 80, and the second expansion beam 90 may be connected to the bracket 80 in various manners, such as welded connection, snap-fit connection, riveted connection, or threaded connection. In some embodiments, the second expansion beam 90 is welded to the bracket 80, allowing for firm connection between the second expansion beam 90 and the bracket 80.

The second expansion beam 90 can absorb an acting force from the second battery cell 32, and the second expansion beam 90 is configured to constrain the swelling and deformation of the second battery cell 32.

The second expansion beam 90 divides a space, inside the box 10, on a side of the bracket 80 facing away from the first battery cell 31 into a second battery compartment 14 and a second electrical compartment 15, the second expansion beam 90 may extend along the second direction Y, and the second battery compartment 14 and the second electrical compartment 15 may be distributed in the first direction X.

The second battery compartment 14 is configured to accommodate the second battery cell 32, and the second electrical compartment 15 is configured to accommodate electrical components of the battery apparatus 100, where the electrical components may include but are not limited to the second electrical component 42.

The second electrical component 42 is an electrical component electrically connected to the second battery cell 32. The second electrical component 42 is configured to monitor information such as voltage, temperature, and current of the second battery cell 32, and the second electrical component 42 is further configured for real-time monitoring, control, and protection of the second battery cell 32. For example, the second electrical component 42 may include but is not limited to a second battery monitoring unit and a second battery management unit.

In some embodiments, the battery apparatus 100 may further include a fourth expansion beam 52, where the fourth expansion beam 52 is provided in the box 10, the fourth expansion beam 52 and the second expansion beam 90 may be spaced apart from each other in the first direction X, the second battery cell 32 is disposed between the fourth expansion beam 52 and the second expansion beam 90, and the first direction X may be perpendicular to a large surface of the second battery cell 32, the large surface of the second battery cell 32 referring to a surface of the second battery cell 32 having a larger area.

The second expansion beam 90 has specified strength, and the second expansion beam 90 may be made of metal, for example, aluminum, aluminum alloy, or steel.

The third beam 91 and the fourth beam 92 are two components constituting the second expansion beam 90, and the third beam 91 and the fourth beam 92 may be integrally formed, for example, the second expansion beam 90 is integrally extruded.

An angle between the third beam 91 and the fourth beam 92 may be an acute angle, a right angle, or an obtuse angle. Optionally, the angle between the third beam 91 and the fourth beam 92 is greater than or equal to 90°, so that under the condition of ensuring high overall strength of the second expansion beam 90, the second mounting space 93 can have a larger volume.

The second electrical component 42 and the second expansion beam 90 may be mounted in various manners, such as threaded connection, welded connection, or snap-fit connection.

During assembling of the second electrical component 42 and the second expansion beam 90, part of the second electrical component 42 may be located in the second mounting space 93, or an entirety of the second electrical component 42 may be located in the second mounting space 93.

In the foregoing solution, the third beam 91 and the fourth beam 92 are arranged at an angle with each other, which can enhance the overall strength of the second expansion beam 90, so as to facilitate constraining of the swelling and deformation of the second battery cell 32; and at least part of the second electrical component 42 is mounted in the second mounting space 93 formed by the third beam 91 and the fourth beam 92, which utilizes the second mounting space 93, allowing for compact mounting of the structure inside the box 10, and improves the space utilization inside the box 10, allowing for higher energy density of the battery apparatus 100.

Referring to FIG. 4, according to some embodiments of this application, the bracket 80 has a first end portion 81, and in the first direction X, the first end portion 81 extends beyond the first battery cell 31 and the second battery cell 32, the first direction X being perpendicular to the third direction Z; and in the third direction Z, the second expansion beam 90 and the first expansion beam 20 are located on two sides of the first end portion 81.

The first end portion 81 may be an end portion of the bracket 80 in the first direction X, and in a direction from the first battery compartment 11 to the second electrical compartment 15, the first end portion 81 extends beyond the first battery cell 31 and the second battery cell 32, so that in the third direction Z, the second expansion beam 90 and the first expansion beam 20 are located on two sides of the first end portion 81.

In some embodiments, on the same projection plane perpendicular to the third direction Z, an orthographic projection of the second expansion beam 90 at least partially overlaps with an orthographic projection of the first expansion beam 20. Optionally, on the same projection plane perpendicular to the third direction Z, the orthographic projection of the second expansion beam 90 completely overlaps with the orthographic projection of the first expansion beam 20.

In the foregoing solution, the first end portion 81 extends beyond the first battery cell 31 and the second battery cell 32, and the second expansion beam 90 and the first expansion beam 20 are located on two sides of the first end portion 81 in the third direction Z, facilitating the layout of the first electrical component 41 and the second electrical component 42 and improving the space utilization on two sides of the bracket 80 in the third direction Z.

Referring to FIG. 4, according to some embodiments of this application, the box 10 includes a bottom wall 13, the bottom wall 13 carries the first battery cell 31, the first battery compartment 11 and the first electrical compartment 12 are arranged in sequence in the first direction X, and the first direction X is perpendicular to the thickness direction of the bottom wall 13; and in a direction from the first battery compartment 11 to the first electrical compartment 12, the bottom wall 13 extends beyond the bracket 80, the first electrical compartment 12 communicates with the second electrical compartment 15, and the third direction Z is parallel to the thickness direction of the bottom wall 13.

The bottom wall 13 is configured to support the first battery cell 31, and the first battery cell 31 may be adhered to the bottom wall 13 to achieve the assembly positioning of the first battery cell 31.

In some embodiments, the box 10 further includes a first side wall 16 and a second side wall 17, where the first side wall 16 and the second side wall 17 are spaced apart from each other in the first direction X, the first side wall 16 and the second side wall 17 are located at two opposite ends of the bottom wall 13 in the first direction, an end of the first side wall 16 is connected to the bottom wall 13, and an end of the second side wall 17 is connected to the bottom wall 13. The first electrical component 41, the first expansion beam 20, and the first battery cell 31 are all disposed between the first side wall 16 and the second side wall 17, the first expansion beam 20 is closer to the first side wall 16 relative to the first battery cell 31, and the first side wall 16, the first expansion beam 20, and the bottom wall 13 enclose the first electrical compartment 12. In the direction from the first battery compartment 11 to the first electrical compartment 12, the bottom wall 13 extends beyond the bracket 80, so that a gap is present between the bracket 80 and the first side wall 16, and the first electrical compartment 12 communicates with the second electrical compartment 15.

After the first electrical compartment 12 communicates with the second electrical compartment 15, a portion of the bottom wall 13 extending beyond the bracket 80 has a large space in the third direction Z, which can accommodate more electrical components, so that the space inside the box 10 in the third direction Z can be utilized.

In the foregoing solution, the first electrical compartment 12 communicates with the second electrical compartment 15, which facilitates the provision of other components in the space where the bottom wall 13 extends beyond the bracket 80, thereby improving the space utilization inside the box 10.

Referring to FIG. 4, according to some embodiments of this application, the battery apparatus 100 further includes a high-voltage box 60, where the high-voltage box 60 is provided on the bottom wall 13, and the high-voltage box 60 is provided in the first electrical compartment 12 and the second electrical compartment 15.

The high-voltage box 60 is provided in the first electrical compartment 12 and the second electrical compartment 15, and the high-voltage box 60 extends beyond a surface of the bracket 80 facing away from the bottom wall 13 in the third direction Z, so that large electrical components can be disposed in the third direction Z to reduce the space occupied in the first direction X.

In the foregoing solution, the high-voltage box 60 is provided in the first electrical compartment 12 and the second electrical compartment 15, which can improve the utilization of the space where the bottom wall 13 extends beyond the bracket 80, allowing for a compact structure of the components inside the box 10.

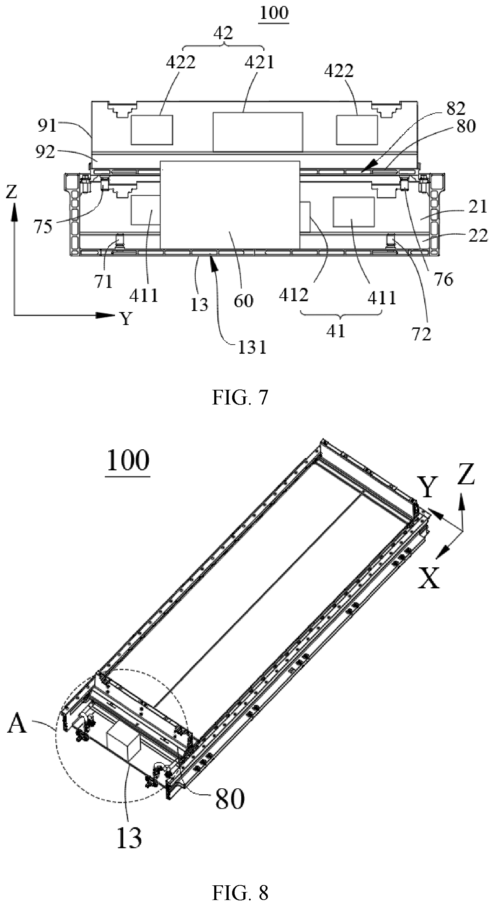

Referring to FIG. 4, and further referring to FIG. 7, FIG. 7 is a cross-sectional view of a partial structure of a battery apparatus according to some other embodiments of this application. According to some embodiments of this application, the third beam 91 cooperates with the second battery cell 32, and the third beam 91 and/or the fourth beam 92 is connected to the bracket 80; and the second electrical component 42 includes a second battery monitoring unit 421 and a second battery management unit 422, where the second battery monitoring unit 421 is mounted on either of the third beam 91 and the fourth beam 92, and the second battery management unit 422 is mounted on either of the third beam 91 and the fourth beam 92.

The third beam 91 may cooperate with the second battery cell 32 in various manners, for example, the third beam 91 may be connected to the second battery cell 32 via a buffer pad, or the third beam 91 may be attached to a large surface of the second battery cell 32.

In some embodiments, the third beam 91 may be connected to the bracket 80, the fourth beam 92 may be connected to the bracket 80, or the third beam 91 and the fourth beam 92 may be separately connected to the bracket 80.

Optionally, the fourth beam 92 may be located at an end of the third beam 91 closer to the bracket 80, and the fourth beam 92 and the third beam 91 are separately connected to the bracket 80.

The third beam 91 and/or the fourth beam 92 may be connected to the bracket 80 in various manners, such as welded connection, adhesive connection, snap-fit connection, or threaded connection. In some embodiments, the third beam 91 and/or the fourth beam 92 is welded to the bracket 80, allowing for firm connection between the third beam 91 and/or the fourth beam 92 and the bracket 80.

The second battery monitoring unit 421 is configured to monitor battery state information such as voltage and temperature of the second battery cell 32.

In some embodiments, the battery apparatus 100 further includes a second sampling assembly, where the second sampling assembly is electrically connected to the second battery monitoring unit 421, and the second sampling assembly is electrically connected to the second battery cell 32 and collects voltage signals, temperature signals, current signals, or the like of the second battery cell 32.

The second battery monitoring unit 421 may be mounted on the third beam 91, or the second battery monitoring unit 421 may be mounted on the fourth beam 92.

The second battery management unit 422 is configured for real-time monitoring, control, and protection of the second battery cell 32, and the second battery monitoring unit 421 may be electrically connected to the second battery management unit 422.

The second battery management unit 422 may be mounted on the third beam 91, or the second battery management unit 422 may be mounted on the fourth beam 92.

In the foregoing solution, the third beam 91 and/or the fourth beam 92 is connected to the bracket 80, so as to facilitate the assembly positioning of the second expansion beam 90, and facilitate constraining of the swelling and deformation of the second battery cell 32 by the second expansion beam 90. The second battery monitoring unit 421 is configured to monitor battery state information such as voltage and temperature of the second battery cell 32, and the second battery monitoring unit 421 is mounted on the third beam 91 or the fourth beam 92 to facilitate the assembly positioning of the second battery monitoring unit 421; and the second battery management unit 422 is configured for real-time monitoring, control, and protection of the second battery cell 32, and the second battery management unit 422 is mounted on the third beam 91 or the fourth beam 92 to facilitate the assembly positioning of the second battery management unit 422.

Referring to FIG. 7, according to some embodiments of this application, the second battery monitoring unit 421 is mounted on the third beam 91, and a large surface of the second battery monitoring unit 421 is attached to a wall surface of the third beam 91 forming the second mounting space 93; and the second battery management unit 422 is mounted on the fourth beam 92 and spaced apart from the second battery monitoring unit 421.

The large surface of the second battery monitoring unit 421 refers to a surface of the second battery monitoring unit 421 having a larger area.

The wall surface of the third beam 91 forming the second mounting space 93 refers to a wall surface of the third beam 91 facing away from the second battery cell 32, and this wall surface may be arranged facing the second electrical component 42.

In some embodiments, the second battery monitoring unit 421 may be threadedly connected to the third beam 91 via a bolt to facilitate the assembly and disassembly of the second battery monitoring unit 421.

In some embodiments, the second battery management unit 422 may be threadedly connected to the fourth beam 92 via a bolt to facilitate the assembly and disassembly of the second battery management unit 422.

The second battery management unit 422 is spaced apart from the second battery monitoring unit 421. For example, the second battery management unit 422 may be spaced apart from the second battery monitoring unit 421 in the second direction Y. For another example, the second battery management unit 422 may be spaced apart from the second battery monitoring unit 421 in the third direction Z.

In the foregoing solution, the third beam 91 cooperates with the second battery cell 32, and a large surface of the second battery monitoring unit 421 is attached to the wall surface of the third beam 91 forming the second mounting space 93, so that the second battery monitoring unit 421 and the third beam 91 have a large connection area, improving the connection stability between the second battery monitoring unit 421 and the third beam 91, and the distance between the second battery monitoring unit 421 and the second battery cell 32 is relatively short, allowing for a relatively short connection circuit between the second battery monitoring unit 421 and the second battery cell 32. The second battery management unit 422 is mounted on the fourth beam 92 and spaced apart from the second battery monitoring unit 421, thereby improving the utilization of the second mounting space 93 and reducing the risk of interference between the second battery management unit 422 and the second battery monitoring unit 421.

Referring to FIG. 4, according to some embodiments of this application, the third beam 91 cooperates with the second battery cell 32, and the third beam 91 and/or the fourth beam 92 is connected to the bracket 80; and the third beam 91 has a third wall surface 911 facing away from the second battery cell 32, the fourth beam 92 has a fourth wall surface 921 facing away from the bracket 80, the third wall surface 911 and the fourth wall surface 921 enclose the second mounting space 93, and an angle θ2 between the third wall surface 911 and the fourth wall surface 921 is an obtuse angle.

The third beam 91 and/or the fourth beam 92 is connected to the bracket 80 to facilitate firm connection between the second expansion beam 90 and the bracket 80.

In some embodiments, the fourth wall surface 921 may be disposed parallel to the bracket 80, the third wall surface 911 may be disposed inclined to the thickness direction of the bracket 80, and the thickness direction of the bracket 80 may be parallel to the third direction Z.

The angle θ2 between the third wall surface 911 and the fourth wall surface 921 is an obtuse angle, so that the second mounting space 93 can have a larger opening.

In the foregoing solution, the third beam 91 and/or the fourth beam 92 is connected to the bracket 80, so as to facilitate the assembly positioning of the second expansion beam 90, and facilitate constraining of the swelling and deformation of the second battery cell 32 by the second expansion beam 90. The angle θ2 between the third wall surface 911 and the fourth wall surface 921 is an obtuse angle, so that the second mounting space 93 can have a larger volume, to facilitate accommodation of the second electrical component 42 and improve the space utilization inside the box 10.

Referring to FIG. 7, according to some embodiments of this application, a second flow channel 82 is formed inside the bracket 80, where the second flow channel 82 is configured to accommodate a heat exchange medium; and a position where the bracket 80 is connected to the third beam 91 and/or the fourth beam 92 avoids the second flow channel 82.

The bracket 80 is a hollow structure inside, and the second flow channel 82 is formed inside the bracket 80 to facilitate accommodation of the heat exchange medium.

The bracket 80 may be integrally extruded to facilitate forming of the second flow channel 82 inside the bracket 80 for easy processing and manufacturing. During the extrusion process of the bracket 80, a stiffener may be formed inside the bracket 80 to improve the overall strength of the bracket 80.

In some embodiments, the bracket 80 is welded to the third beam 91 and/or the fourth beam 92 to allow for firm connection between the bracket 80 and the third beam 91 and/or the fourth beam 92.

When the bracket 80 is connected to the third beam 91, the position where the bracket 80 is connected to the third beam 91 avoids the second flow channel 82. When the bracket 80 is connected to the fourth beam 92, the position where the bracket 80 is connected to the fourth beam 92 avoids the second flow channel 82. When the bracket 80 is connected to the third beam 91 and the fourth beam 92, the position where the bracket 80 is connected to the third beam 91 avoids the second flow channel 82, and the position where the bracket 80 is connected to the fourth beam 92 avoids the second flow channel 82.

The bracket 80 may be made of a material with good thermal conductivity, such as aluminum, aluminum alloy, or steel.

In the foregoing solution, the heat exchange medium is accommodated in the second flow channel 82, so that the temperature of the second battery cell 32 can be adjusted using the heat exchange medium, improving the cycling performance of the second battery cell 32. In addition, the bracket 80 is located between the first battery cell 31 and the second battery, so that the heat exchange medium in the bracket 80 can also adjust the temperature of the first battery cell 31. The position where the bracket 80 is connected to the third beam 91 and/or the fourth beam 92 avoids the second flow channel 82, which can reduce damage to the second flow channel 82 and improve the connection reliability between the bracket 80 and the third beam 91 and/or the fourth beam 92.

Referring to FIG. 7, according to some embodiments of this application, the battery apparatus 100 further includes a second inlet connector 75 and a second outlet connector 76, where both the second inlet connector 75 and the second outlet connector 76 are connected to the bracket 80, and the second inlet connector 75 and the second outlet connector 76 communicate with the second flow channel 82 separately; and both the second inlet connector 75 and the second outlet connector 76 are located in the first electrical compartment 12, and in the second direction Y, the first electrical component 41 is located between the second inlet connector 75 and the second outlet connector 76, the second direction Y being perpendicular to the third direction Z.

In some embodiments, the bracket 80 is provided with a third through hole and a fourth through hole on a side facing the bottom wall 13, where the third through hole communicates the second flow channel 82 with the external environment of the second flow channel 82, the fourth through hole communicates the second flow channel 82 with the external environment of the second flow channel 82, the second inlet connector 75 is disposed in the third through hole, and the second inlet connector 75 is sealingly connected to the bracket 80 to reduce the risk of leakage of the heat exchange medium from a junction between the second inlet connector 75 and the bracket 80; and the second outlet connector 76 is disposed in the fourth through hole, and the second outlet connector 76 is sealingly connected to the bracket 80 to reduce the risk of leakage of the heat exchange medium from a junction between the second outlet connector 76 and the bracket 80.

The second inlet connector 75 and the second outlet connector 76 are spaced apart from each other in the second direction Y to make a flow path of the heat exchange medium in the second flow channel 82 longer. For example, the second inlet connector 75 and the second outlet connector 76 may be disposed at two ends of the bracket 80 in the second direction Y to make the heat exchange medium have a longer flow path in the second flow channel 82, thereby improving the heat exchange effect between the heat exchange medium and the second battery cell 32.

In the foregoing solution, the second inlet connector 75 and the second outlet connector 76 communicate with the second flow channel 82 separately, facilitating connection of the second inlet connector 75 to a pipeline for inputting the heat exchange medium to deliver the heat exchange medium to the second flow channel 82, and facilitating connection of the second outlet connector 76 to a pipeline for outputting the heat exchange medium to discharge the heat exchange medium from the second flow channel 82. In the third direction Z, the second inlet connector 75 and the second outlet connector 76 are located on the side of the bracket 80 facing the bottom wall 13, and the first electrical component 41 is located between the second inlet connector 75 and the second connector, allowing for a compact structure of the second inlet connector 75, the first electrical component 41, and the second outlet connector 76, improving the space utilization inside the box 10 in the second direction Y, and thereby increasing the energy density of the battery apparatus 100.

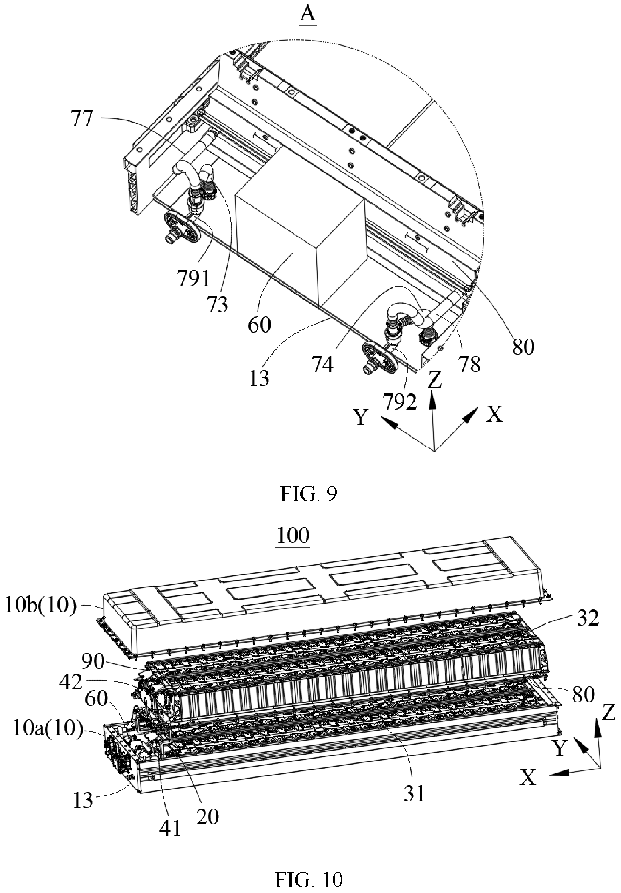

Referring to FIG. 7, and further referring to FIG. 8 and FIG. 9, FIG. 8 is a schematic diagram of a partial structure of a battery apparatus according to some other embodiments of this application, and FIG. 9 is a partial enlarged view of portion A in FIG. 8. According to some embodiments of this application, the battery apparatus 100 further includes a second inlet pipe 77, a second outlet pipe 78, and a high-voltage box 60, where the second inlet pipe 77 is connected to the second inlet connector 75; the second outlet pipe 78 is connected to the second outlet connector 76; and the high-voltage box 60 is provided in the box 10, the first battery cell 31 and the second battery cell 32 are electrically connected to the high-voltage box 60 separately, and in the second direction Y, the high-voltage box 60 is located between the second inlet pipe 77 and the second outlet pipe 78.

To facilitate assembly, the second inlet pipe 77 and the second outlet pipe 78 are located on the side of the bracket 80 facing the bottom wall 13.

The second inlet pipe 77 is a pipe used to input the heat exchange medium into the second flow channel 82, one end of the second inlet pipe 77 is connected to the second inlet connector 75, and the other end of the second inlet pipe 77 is used to connect to a container storing the heat exchange medium.

The second outlet pipe 78 is a pipe used to output the heat exchange medium from the second flow channel 82, one end of the second outlet pipe 78 is connected to the second outlet connector 76, and the other end of the second outlet pipe 78 is used to connect to a container storing the heat exchange medium.

The second inlet pipe 77 and the second outlet pipe 78 communicate with the second flow channel 82 separately to facilitate the circulation of the heat exchange medium in the second flow channel 82, improving the heat exchange effect.

In some embodiments, to facilitate the delivery of the heat exchange medium, referring to FIG. 9, the battery apparatus 100 further includes a main inlet pipe 791 and a main outlet pipe 792, where the first inlet pipe 73 and the second inlet pipe 77 are separately connected to the main inlet pipe 791, and the first outlet pipe 74 and the second outlet pipe 78 are separately connected to the main outlet pipe 792. Optionally, the first inlet pipe 73 and the second inlet pipe 77 may be located at the same end of the bottom wall 13 in the second direction Y, and the first outlet pipe 74 and the second outlet pipe 78 may be located at the same end of the bottom wall 13 in the second direction Y.

At least part of the high-voltage box 60 is disposed in the first electrical compartment 12, and in the second direction Y, the high-voltage box 60 is located between the second inlet pipe 77 and the second outlet pipe 78.

The second inlet pipe 77 and the second outlet pipe 78 are spaced apart from each other in the second direction Y, and a large distance may be present between the second inlet pipe 77 and the second outlet pipe 78, to make the heat exchange medium have a longer flow path in the second flow channel 82. For example, the second inlet pipe 77 and the second outlet pipe 78 may be provided at two ends of the bracket 80 in the second direction Y.

In the foregoing solution, the second inlet pipe 77 and the second outlet pipe 78 are located in the first electrical compartment 12, and the high-voltage box 60 is located between the second inlet pipe 77 and the second outlet pipe 78, facilitating the use of the space inside the box 10 in the second direction Y and improving the space utilization inside the box 10.

According to some embodiments of this application, a cavity is formed inside each of the third beam 91 and the fourth beam 92.

The third beam 91 may be extruded, and at least one stiffener may be provided in the cavity of the third beam 91, where the stiffener divides the cavity into multiple chambers.

The fourth beam 92 may be extruded, and at least one stiffener may be provided in the cavity of the fourth beam 92, where the stiffener divides the cavity into multiple chambers.

In the foregoing solution, a cavity is formed inside each of the third beam 91 and the fourth beam 92, which can reduce the weight of the third beam 91 and the fourth beam 92, and facilitate absorbing of an acting force from the second battery cell 32, thus constraining the swelling and deformation of the second battery cell 32.

Referring to FIG. 10, FIG. 10 is an exploded schematic diagram of a structure of a battery apparatus according to some other embodiments of this application. According to some embodiments of this application, the box 10 includes a first box body 10a and a second box body 10b, where the first box body 10a and the second box body 10b are snap-fitted to form an accommodating space, and the first battery cell 31 and the second battery cell 32 are accommodated in the accommodating space.

In some embodiments, the first box body 10a and the second box body 10b are arranged in the third direction Z, the first box body 10a may be a lower box body, and the second box body 10b may be a box cover.

According to some embodiments of this application, an embodiment of this application further provides an electric device including the battery apparatus 100 provided in any one of the foregoing embodiments, where the battery apparatus 100 is configured to supply electrical energy.

The electric device may be any one of the foregoing apparatuses or systems using the battery apparatus 100.

According to some embodiments of this application, referring to FIG. 2 to FIG. 10, an embodiment of this application provides a battery apparatus 100 including a box 10, a first battery cell 31, a first expansion beam 20, a first electrical component 41, a second battery cell 32, a bracket 80, a second expansion beam 90, a second electrical component 42, and a high-voltage box 60.

The box 10 includes a first box body 10a and a second box body 10b, where the first box body 10a and the second box body 10b are snap-fitted to form an accommodating space, the first battery cell 31 and the second battery cell 32 are accommodated in the accommodating space, and the first battery cell 31 and the second battery cell 32 are arranged in a third direction Z. The bracket 80 is disposed in the accommodating space, and the bracket 80 separates the first battery cell 31 and the second battery cell 32. The first battery cell 31 and the first expansion beam 20 are located in a space enclosed by the bracket 80 and the first box body 10a, and the second battery cell 32 and the second expansion beam 90 are located in a space enclosed by the bracket 80 and the second box body 10b.

The first box body 10a includes a bottom wall 13, the first battery cell 31 and the first expansion beam 20 are disposed on the bottom wall 13, the bracket 80 is disposed parallel to the bottom wall 13, and the second battery cell 32 and the second expansion beam 90 are disposed on the bracket 80.

The first expansion beam 20 divides a space enclosed by the bracket 80 and the bottom wall 13 into a first battery compartment 11 and a first electrical compartment 12, where the first battery compartment 11 and the first electrical compartment 12 are distributed in a first direction X, the first battery cell 31 is disposed in the first battery compartment 11, and the first electrical component 41 is disposed in the first electrical compartment 12. The first expansion beam 20 includes a first beam 21 and a second beam 22, where a first mounting space 23 is formed between the first beam 21 and the second beam 22, the first mounting space 23 is located in the first electrical compartment 12, and the first beam 21 cooperates with the first battery cell 31.

The second expansion beam 90 divides a space on a side of the bracket 80 facing away from the bottom wall 13 into a second battery compartment 14 and a second electrical compartment 15, where the second battery compartment 14 and the second electrical compartment 15 are distributed in the first direction X, the second battery cell 32 is disposed in the second battery compartment 14, and the second electrical component 42 is disposed in the second electrical compartment 15. The first battery compartment 11 and the second battery compartment 14 are located on two sides of the bracket 80 in the third direction Z. The second expansion beam 90 includes a third beam 91 and a fourth beam 92, where a second mounting space 93 is formed between the third beam 91 and the fourth beam 92, the second mounting space 93 is located in the second electrical compartment 15, and the third beam 91 cooperates with the second battery cell 32.

In the direction from the first battery compartment 11 to the first electrical compartment 12, the bottom wall 13 extends beyond the bracket 80, the first electrical compartment 12 communicates with the second electrical compartment 15, the high-voltage box 60 is disposed on the bottom wall 13, and the high-voltage box 60 is located in the first electrical compartment 12 and the second electrical compartment 15.

In the battery apparatus 100 according to this embodiment of this application, the first electrical component 41 is disposed in the first mounting space 23, the second electrical component 42 is disposed in the second mounting space 93, and the high-voltage box 60 is disposed in the first electrical compartment 12 and the second electrical compartment 15, allowing for compact mounting of electrical components inside the box 10, improving the space utilization inside the box 10, and making the battery apparatus 100 have higher energy density.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery apparatus, comprising:
a box;
a first expansion beam, provided in the box and dividing a space in the box into a first battery compartment and a first electrical compartment;
a first battery cell, provided in the first battery compartment and cooperating with the first expansion beam; and
a first electrical component, provided in the first electrical compartment and electrically connected to the first battery cell;
wherein the first expansion beam comprises a first beam and a second beam connected at an angle, a first mounting space is formed between the first beam and the second beam, the first mounting space is located in the first electrical compartment, and at least part of the first electrical component is mounted on the first expansion beam and accommodated in the first mounting space.

2. The battery apparatus according to claim 1, wherein the box comprises a bottom wall, the bottom wall carries the first battery cell, the first beam cooperates with the first battery cell, and the first beam and/or the second beam is connected to the bottom wall.

3. The battery apparatus according to claim 2, wherein the battery apparatus further comprises a high-voltage box, the high-voltage box is provided in the first electrical compartment, the high-voltage box is electrically connected to the first battery cell, and in a first direction, the high-voltage box, the first expansion beam, and the first battery cell are arranged in sequence, the first direction being perpendicular to a thickness direction of the bottom wall.

4. The battery apparatus according to claim 2 or 3, wherein the first electrical component comprises a first battery monitoring unit and a first battery management unit; wherein
the first battery monitoring unit is mounted on either of the first beam and the second beam, and the first battery management unit is mounted on either of the first beam and the second beam.

5. The battery apparatus according to claim 4, wherein the first battery monitoring unit is mounted on the first beam, and a large surface of the first battery monitoring unit is attached to a wall surface of the first beam forming the first mounting space; and
the first battery management unit is mounted on the second beam and spaced apart from the first battery monitoring unit.

6. The battery apparatus according to any one of claims 2 to 5, wherein a first flow channel is formed inside the bottom wall, the first flow channel being configured to accommodate a heat exchange medium; and
a position where the bottom wall is connected to the first beam and/or the second beam avoids the first flow channel.

7. The battery apparatus according to claim 6, wherein the battery apparatus further comprises a first inlet connector and a first outlet connector, both the first inlet connector and the first outlet connector are connected to the bottom wall, and the first inlet connector and the first outlet connector communicate with the first flow channel separately; and
in a second direction, the first electrical component is located between the first inlet connector and the first outlet connector, the second direction being perpendicular to a thickness direction of the bottom wall.

8. The battery apparatus according to claim 7, wherein the battery apparatus further comprises:
a first inlet pipe, connected to the first inlet connector;
a first outlet pipe, connected to the first outlet connector; and
a high-voltage box, provided in the box and on the bottom wall, wherein the high-voltage box is electrically connected to the first battery cell, and in the second direction, the high-voltage box is located between the first inlet pipe and the first outlet pipe.

9. The battery apparatus according to any one of claims 2 to 8, wherein the first beam has a first wall surface facing away from the first battery cell, the second beam has a second wall surface facing away from the bottom wall, the first wall surface and the second wall surface enclose the first mounting space, and an angle between the first wall surface and the second wall surface is an obtuse angle.

10. The battery apparatus according to any one of claims 1 to 9, wherein a cavity is formed inside each of the first beam and the second beam.

11. The battery apparatus according to any one of claims 1 to 10, wherein the battery apparatus further comprises:
a second battery cell, provided in the box and arranged with the first battery cell in a third direction; and
a bracket, provided between the first battery cell and the second battery cell, the bracket carrying the second battery cell; wherein
the box comprises a bottom wall, the bottom wall carries the first battery cell, and the third direction is parallel to a thickness direction of the bottom wall.

12. The battery apparatus according to claim 11, wherein the battery apparatus further comprises:
a second expansion beam, provided on the bracket and dividing a space on a side of the bracket facing away from the first battery cell in the box into a second battery compartment and a second electrical compartment, wherein the second battery cell is disposed in the second battery compartment and cooperates with the second expansion beam; and
a second electrical component, provided in the second electrical compartment and electrically connected to the second battery cell;
wherein the second expansion beam comprises a third beam and a fourth beam connected at an angle, a second mounting space is formed between the third beam and the fourth beam, the second mounting space is located in the second electrical compartment, and at least part of the second electrical component is mounted on the second expansion beam and accommodated in the second mounting space.

13. The battery apparatus according to claim 12, wherein the bracket has a first end portion, and in a first direction, the first end portion extends beyond the first battery cell and the second battery cell, the first direction being perpendicular to the third direction; and
in the third direction, the second expansion beam and the first expansion beam are located on two sides of the first end portion.

14. The battery apparatus according to claim 13, wherein the box comprises the bottom wall, the bottom wall carries the first battery cell, the first battery compartment and the first electrical compartment are arranged in sequence in the first direction, and the first direction is perpendicular to the thickness direction of the bottom wall; and
in a direction from the first battery compartment to the first electrical compartment, the bottom wall extends beyond the bracket, the first electrical compartment communicates with the second electrical compartment, and the third direction is parallel to the thickness direction of the bottom wall.

15. The battery apparatus according to claim 14, wherein the battery apparatus further comprises a high-voltage box, the high-voltage box is provided on the bottom wall, and the high-voltage box is provided in the first electrical compartment and the second electrical compartment.

16. The battery apparatus according to any one of claims 12 to 15, wherein the third beam cooperates with the second battery cell, and the third beam and/or the fourth beam is connected to the bracket; and
the second electrical component comprises a second battery monitoring unit and a second battery management unit, wherein the second battery monitoring unit is mounted on either of the third beam and the fourth beam, and the second battery management unit is mounted on either of the third beam and the fourth beam.

17. The battery apparatus according to claim 16, wherein the second battery monitoring unit is mounted on the third beam, and a large surface of the second battery monitoring unit is attached to a wall surface of the third beam forming the second mounting space; and
the second battery management unit is mounted on the fourth beam and spaced apart from the second battery monitoring unit.

18. The battery apparatus according to any one of claims 12 to 17, wherein the third beam cooperates with the second battery cell, and the third beam and/or the fourth beam is connected to the bracket; and
the third beam has a third wall surface facing away from the second battery cell, the fourth beam has a fourth wall surface facing away from the bracket, the third wall surface and the fourth wall surface enclose the second mounting space, and an angle between the third wall surface and the fourth wall surface is an obtuse angle.

19. The battery apparatus according to any one of claims 12 to 18, wherein a second flow channel is formed inside the bracket, the second flow channel being configured to accommodate a heat exchange medium; and
a position where the bracket is connected to the third beam and/or the fourth beam avoids the second flow channel.

20. The battery apparatus according to claim 19, wherein the battery apparatus further comprises a second inlet connector and a second outlet connector, both the second inlet connector and the second outlet connector are connected to the bracket, and the second inlet connector and the second outlet connector communicate with the second flow channel separately; and
both the second inlet connector and the second outlet connector are located in the first electrical compartment, and in a second direction, the first electrical component is located between the second inlet connector and the second outlet connector, the second direction being perpendicular to the third direction.

21. The battery apparatus according to claim 20, wherein the battery apparatus further comprises:
a second inlet pipe, connected to the second inlet connector;
a second outlet pipe, connected to the second outlet connector; and
a high-voltage box, provided in the box, wherein the first battery cell and the second battery cell are electrically connected to the high-voltage box separately, and in the second direction, the high-voltage box is located between the second inlet pipe and the second outlet pipe.

22. The battery apparatus according to any one of claims 12 to 21, wherein a cavity is formed inside each of the third beam and the fourth beam.

23. An electric device, comprising the battery apparatus according to any one of claims 1 to 22, wherein the battery apparatus is configured to supply electrical energy.
